# EUROPEAN PATENT APPLICATION

(11) **EP 4 741 092 A1**
(43) Date of publication of application: **13.05.2026**
(21) Application number: 24212016.0
(22) Date of filing: 11.11.2024
(51) Int. Cl.: B23K 9/20, B23K 9/32

(54) **METHOD FOR CONTROLLING THE CONDITION OF A STUD HOLDER OF A WELDING DEVICE AND ARRANGEMENT COMPRISING A WELDING DEVICE AND A TESTING UNIT**

(71) Applicant: Newfrey LLC, New Britain, CT 06053 (US)
(72) Inventor: LAUER, André, 35394 Gießen (DE); NAB, Nicolas, 35394 Gießen (DE); SPIESS, Manuel, 35394 Gießen (DE); BRIEL, Karl-Heinz, 35394 Gießen (DE); SCHNEIDER, Peter, 35394 Gießen (DE); EISENBERG, Christoph, 35394 Gießen (DE); GIERELT, Elisabeth, 35394 Gießen (DE)
(74) Representative: SBD IPAdmin

(57) **Abstract**

Arrangement and method for controlling the condition of a stud holder (14) of a welding device (10) comprising the step of:
- Providing a welding device comprising a stud holder extending along a longitudinal axis (X) and forming a recess adapted to receive a stud for its welding to a workpiece and a linear drive adapted to drive the stud holder for the welding of a stud to a workpiece;
- Providing a testing unit;
- Aligning the welding device and the testing unit (12);
- Driving the stud holder (14) of the welding device toward the testing unit;
- Measuring a parameter of the linear drive for assessing the condition of the stud holder.

## Description

The present invention is directed to a method for controlling the condition of a stud holder. More particularly, the present invention is directed to a method for controlling the operational status or the remaining life time of a stud holder in a stud welding device. The present invention is further directed to an arrangement for implementing the method for controlling a stud holder, in particular a stud holder of a stud welding device.

Stud welding is often performed as an automated process and a plurality of welds are performed by the same device. The positioning of the welding head or the bolt and the welding are implemented automatically.

Stud welding devices commonly comprise a welding head with a stud holder having a pointed region for holding a weld stud. The stud holder is movable substantially perpendicularly to the surface of a workpiece and away from it by a linear drive. The linear drive is provided or cooperate with a sensor unit adapted to detect the force or the displacement or both. The welding device comprises a system for producing an arc by lifting and striking between the weld part and the surface of the workpiece. For example, GB2094201 discloses an electrical stud welding apparatus adapted to weld studs of different diameters with a conical feeler used to determine the diameter of the bore of the stud holder.

The stud holder may be a hollow tubular stud holder which is tapered in its pointed region and has tongues which are formed in such a way that a weld stud pushed through the hollow tubular stud holder spreads the tongues apart upon its arrival in the pointed region and can therefore be pushed out of the stud holder completely.

A weld stud pushed through the stud holder is pushed out of the stud holder to a certain extent, so it can be welded to a component or a workpiece. Once the weld stud has been welded to the component the entire stud welding device is pulled back along the weld stud axis and the stud holder releases the weld stud completely.

The quality of the welding result depends, inter alia, on the fact that the studs are accurately positioned and are welded essentially perpendicular to the component. If damages occur to the stud holder, the stud is no longer held properly and can, for example, be obliquely-welded to a component or workpiece.

Document DE20105789U1 discloses a stud holder provided with a sensor equipment, for example strain gauges, adapted to detect a broken tongue of the stud holder. Document US5048320 is more generally directed to a method of inspection of structures with a pressure sensor.

Document DE10035371 also discloses a stud holder comprising a sensor equipment connected to an evaluation and control unit in order to compare a nominal value with a measured value. Such processing allows to detect a stud holder which is defect.

However, such sensor equipment is difficult to implement, raises the costs of a stud holder and require space. Indeed, the assembly of the sensor equipment on the stud holder is necessary and if a stud holder has to be changed, the sensor equipment has to be removed from the old stud holder and mounted to the new stud holder. This step is time-consuming and difficult to implement in an industrial environment.

DE102014212735A1 is directed to a method for welding stud, in which an optical control of the stud holder is performed by means of an optical control device. The stud holder is moved from a welding position into a checking position for carrying out the optical control. An evaluation unit processes the image data of the stud holder and evaluates it with regard to the presence of a fault.

Such method implies an image comparison. The processor will detect or not the presence of a faulty stud holder. The faulty stud holder is then changed. However, such optical control does not allow an early detection of a faulty stud holder. Besides, the optical control can only be used in a very clean environment, in order to avoid any image disturbance.

Document EP3473369B1 discloses a method of controlling the remaining life time of a stud holder having a testing device comprising a testing tool and a sensor adapted to measure a testing force of the testing tool.

Such method is satisfactory, however there is still a need to provide an improved method that is easy to implement in any environment and that limits the number of additional components.

Examples of the present disclosure aim to address the aforementioned problems.

According to an aspect of the present disclosure there is a method for controlling the condition of a stud holder of a welding device comprising the step of:
- Providing a welding device comprising a stud holder extending along a longitudinal axis and defining a recess adapted to receive a stud for its welding to a workpiece, and a linear drive adapted to drive the stud holder for the welding of a stud to a workpiece;

- Providing a testing unit;
- Aligning the welding device and the testing unit;
- Driving the stud holder toward the testing unit;
- Measuring a parameter of the linear drive for assessing the condition of the stud holder.

In a known manner, the stud holder comprises a plurality of tongues distributed around the longitudinal axis and forming the recess adapted to receive a stud. However, in other embodiments, the stud holder may be provided with another deformable element adapted to receive and release the stud.

Instead of having an additional sensor unit measuring for instance the deviation of a tongue of the stud holder, the present method allows the use of the existing linear drive incorporated in the welding device to assess the condition of the stud holder. Thus, no additional sensor unit is needed and the present method may be used for different kind of geometry of stud holders. Measuring a parameter of the linear drive such as the force or a reached position or a force-displacement curve or the power to reach a certain position or any other related parameter allow assessing the condition of the stud holder. For example, the measured parameter(s) may be compared to a reference value or a reference range of values or to previously measured values or may also be processed by a controller with or without machine learning system. For instance, if the spring force of the stud holder decreases continuously, the linear drive also experiences less travel resistance and therefore also requires less power to reach a defined position. A deviation for instance with a reference value or range or with previously measured value gives an indication of wear and the stud holder can be changed or repaired or cleaned before said stud holder breaks. Thus, an early detection of a faulty stud holder may be detected. This ensures that decisions to change a stud holder for instance are based on objective insights and patterns rather than subjective judgment.

In an embodiment, the testing unit comprises a base body and a testing tool protruding from the base body, and wherein the testing tool has a conical shape configured to be partly inserted within the recess of the stud holder. The test unit is simple and may be arranged at any place in the vicinity of the welding device. The testing unit comprises only mechanical parts and does not require any connection or power source or additional sensor unit.

In an embodiment, the testing tool is floatingly mounted on the base body. Thus, the testing tool can be automatically centered in the stud holder. Besides, fluctuation in the measurements after for instance the change of a stud holder can be compensated or reduced by the floating testing tool. The floating may be achieved with springs, elastomeric mounts, bearings, ...

In an embodiment, the stud holder is first driven in a base position, in which the stud holder contacts the testing tool and is then further driven toward the base body to measure the parameter of the linear drive for assessing the condition of the stud holder. The base position allows improving the accuracy of the measurements. The automatic alignment of the stud holder with the testing tool may occur in the base position.

In an embodiment, the measurement is realized by controlling the movement of the linear drive up to a defined position and comparing the measured force used by the linear drive to reach the defined position with a reference force. The reference force can be a reference value or a range of reference values.

In an embodiment, the measurement is realized by moving the linear drive until a pre-defined force is reached and comparing the position reached by the linear drive with a reference position. The reference position may be a range of reference positions.

In an embodiment, the measurement is realized by moving the linear drive up to a reference position, recording the force-displacement curve, and comparing the recorded force-displacement curve with a reference force-displacement curve.

In an embodiment, an alert for programming the replacement of the stud holder is sent to a control unit if:
- the measured force differs from the reference force, or
- the reached position differs from the reference position, or
- the recorded force-displacement curve differs from the reference force-displacement curve.

The term "differs" may mean that there is a substantial difference. A range of reference values may be provided and the measured value compared to the reference value range. The alert occurs if the measured value is outside of the reference value range. The alert allows a predictive maintenance, reducing the likelihood of costly unplanned downtime and emergency repairs. A warning is first sent such that the production cycle can be adapted consequently.

In an embodiment, the steps of:
- Aligning the welding device and the testing unit;
- Driving the stud holder toward the testing unit;
- Measuring a parameter of the linear drive for assessing the condition of the stud holder,
are undertaken at pre-programmed time or usage intervals.

The method may be adapted to the type of stud holders or the welding device environment or parameters.

In an embodiment, the steps of:
- Aligning the welding device and the testing unit;
- Driving the stud holder toward the testing unit;
- Measuring a parameter of the linear drive for assessing the condition of the stud holder,
are repeated after the detection of a divergence between the measured value and a reference value or when the measured value is outside of a reference value range.

Thus, a measurement error can be detected and a superfluous maintenance operation can be avoided.

In an embodiment, a machine learning system is associated with the welding device for analyzing and predicting the replacement of the stud holder based on the measured parameter of the linear drive. The machine learning system may also collect data on various parameters related to the environment of the joining device, such as maintenance counters, welding parameters, materials, dimensions, and other relevant factors. As the machine learning system collects more data over time, it can continuously improve its predictive capabilities. By learning from past performance and outcomes, the system can refine its predictions and optimize maintenance strategies for stud holder replacements and adapt it to its environment.

In an embodiment, a robot arm moves the welding device for its alignment with the testing unit. The welding device may be a full automated device. Possibly, the welding device may be a semi-automated welding device. In such case, an additional clamping or holding device may be provided, ensuring the correct position and stability of the welding device during the measurement.

In an embodiment, the welding device is manually aligned with the testing unit. The welding device may for instance be a welding gun. In such case, an additional clamping or holding device may be provided, ensuring the correct position and stability of the welding device during the measurement.

According to another aspect of the present invention, there is an arrangement for implementing the method disclosed above comprising a welding device with a stud holder and a linear drive integrated to the welding device adapted to move the stud holder for the welding of a stud to a workpiece, and a testing unit comprising a base body and a testing tool protruding from the base body, wherein the testing tool has a conical shape. The testing unit does not comprise any sensor unit.

In an embodiment, the stud holder comprises a plurality of tongues distributed around the longitudinal axis, wherein the plurality of tongues is adapted to be arranged at least partly around the testing tool and to contact said testing tool.

Other characteristics and advantages of the invention will readily appear from the following description of embodiments, provided as non-limitative examples, in reference to the accompanying drawings.

In the drawings:
Fig. 1 schematically shows an arrangement according to the invention with a welding device with a stud holder and a linear drive, a testing unit and a robot arm;
Fig. 2 schematically shows the arrangement of Fig. 1 without the robot arm in a base position or in a first position; wherein the stud holder contacts the testing unit;
Fig. 3 schematically shows the arrangement of Fig. 2 with the stud holder being driven toward the testing unit for assessing the condition of the stud holder;
Fig. 4A is a diagram that shows the number of measurements realized on the X-axis (ten different measurements) and the amperage leff in Amper measured for each measurement on the Y-axis, when the stud holder is driven to a given position. The measurements are made for ten different stud holders with different conditions, where each curve corresponds to a particular stud holder;
Fig. 4B is a diagram that shows the number of measurements realized on the X-axis (ten different measurements) and the position offset (in mm) for each measurement on the Y-axis, when the linear drive applies a given force (Amperage) to the stud holder. The measurements are made for ten different stud holders with different conditions, where each curve corresponds to a particular stud holder.

On the different figures, the same reference signs designate identical or similar elements.

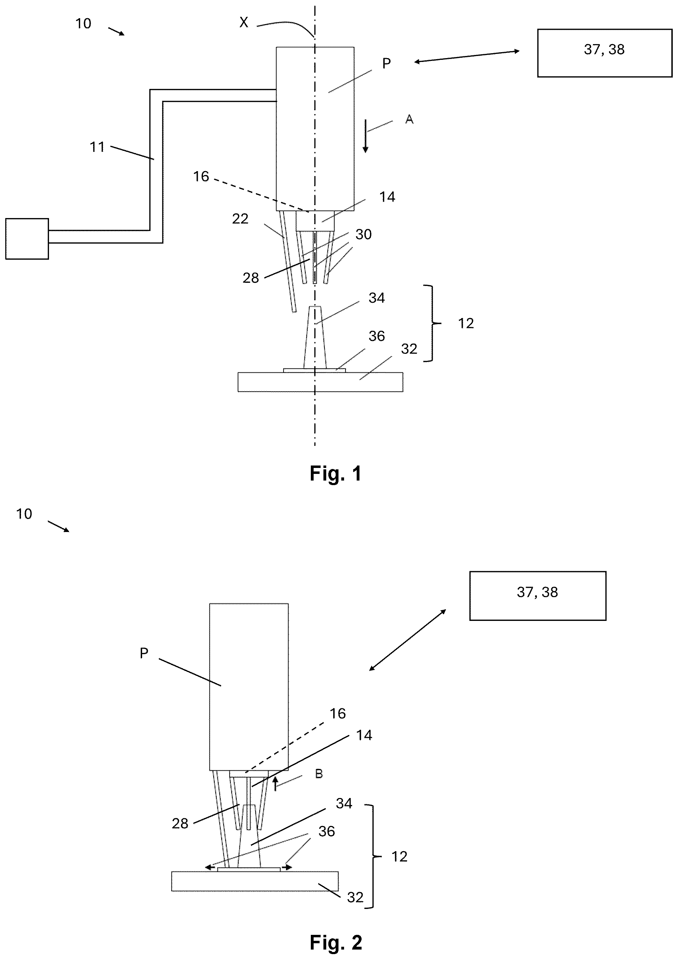

Fig. 1 schematically shows a stud welding device 10 (or stud welding head) and a testing unit 12. In a known manner, a stud welding device 10 may be an automated device, moved for instance by the arm 11 of a robot or a semi-automated device, or a manual device, for instance a welding gun.

The welding device 10 comprises a stud holder 14 and a linear drive 16. The stud holder 14 is designed to securely hold a stud in place during the welding process. The linear drive 16 is responsible for moving the stud holder 14 towards a workpiece, enabling the stud to be welded onto the surface of the workpiece. The linear drive 16 or linear drive mechanism typically consists of a motor, gears, and a linear actuator. The motor provides the necessary power to drive the linear actuator, which is responsible for the linear movement of the stud holder 14.

The linear drive 16 may be equipped with a position control system, which can be achieved using various methods such as stepper motors, servo motors, or hydraulic/pneumatic actuators. The position control system allows precise movement of the linear drive to reach the desired position. In a known manner pneumatic air mechanism P may be provided to move the stud holder 14 and the linear drive 16.

The linear drive 16 may be equipped with position sensors, such as encoders or linear scales, that provide feedback on the current position of the drive. For instance, an optical sensor is used. In other embodiment, other types of sensors may be implemented, such as magnetic, laser sensors, ... This feedback is used by the control system to accurately move the linear drive to the defined position.

The linear drive 16 may be equipped with force sensors or load cells that measure the forces exerted during the movement. These sensors can be integrated into the drive mechanism or placed in the load path to measure the forces directly. For instance, the current is used to measure the force.

A supporting foot 22 that is specifically designed to maintain a consistent distance between the stud holder14 and the workpiece may be provided. The supporting foot 22 acts as a stabilizing element, ensuring that the stud holder remains at the correct distance from the workpiece during the welding process.

The stud holder 14, as schematically depicted in Fig. 1, Fig. 2 or Fig. 3 extends along a longitudinal axis X between a first end portion and a second end portion. The stud holder 14 is a hollow tubular stud holder and comprises a recess 28.

The recess 28 is for example delimited by at least two tongues 30. As represented in Fig. 1 , the recess 28 is delimited by a plurality of tongues 30. The tongues 30 are for instance evenly distributed around the longitudinal axis X. The tongues may have the same length along the longitudinal axis X. For instance, as represented in Fig. 1, the tongues 30 are identical. However, in another embodiments the tongues may not be identical. For example, the tongues may have different length along the longitudinal axis and/or different thickness. For instance, the stud holder may be provided with a double clamping system with tongues overlapping in two layers. The stud holder 14, and more particularly the tongues 30 may be made in a metal material. For example, the tongues are made in spring steel. The stud holder 14 comprises a pointed region and is tapered in its pointed region. The free end of the tongues extends inwardly toward the longitudinal axis X. The tongues are elastically movable, such that the tongues may exert an elastic force on a stud to retain it (and more particularly to retain the shaft of the stud) during and/or before a welding step. A gap is provided between two adjacent tongues 20, such that a relative movement of the tongues is possible. In another embodiment, the stud holder 14 may have another shape or geometry (threaded stud holder, cylindrical stud holder, rectangular or square stud holder, ...).

The stud holder 14 is used to hold a stud during a welding process. During the welding, the stud holder 14 may be exposed to vibrations and/or projections which can lower its performance and/or cause premature wear. Thus, after a predetermined number of welding joints performed by the welding device 10 with the same stud holder 14, said stud holder 14 may be tested to control its condition.

As depicted in Fig. 1, Fig. 2 and Fig. 3, the stud holder 14 may be tested by the testing unit 12.

The testing unit 12 comprises a base body 32 and a testing tool 34 protruding from the base body 32. The testing tool 34 has a conical shape configured to be partly inserted within the recess 28 of the stud holder 14. The base of the cone contacts the base body 32. Thus, the dimension of the testing tool 34 is dependent from the dimension of the recess 28. The testing tool 34 may be floatingly mounted on the base body 32. More particularly, the testing tool 34 is movable in the plane of the base body 32, such that an automatic centering of the testing tool 34 within the recess 28 may occurs. For example, a spring-loaded mechanism may be used to mount the testing tool 34 floatingly on the base body 32. The testing unit 12 does not comprise any particular sensor unit. The testing unit may be arranged on a wall of a welding cell or in any location where it does not interfere with the welding process and is not in the welding device's field during the welding process.

The method for controlling the condition of the stud holder 14 may comprises the following steps.

In a first step, the stud holder 14 is aligned or approximately aligned with the testing tool, as visible in Fig. 1. For instance, a robot arm or a user arranges the welding device with the stud holder at a given distance from the testing tool, with the point of the testing tool substantially aligned with the longitudinal axis. The stud holder 14 is moved in the direction of arrow A. For example, a pneumatic air mechanism P may move the stud holder 14 (and the linear drive 16) in the direction of arrow A. In other embodiments, the stud holder may be moved by other means or mechanisms.

In a possible second step, the stud holder 14 and the linear drive 16 may have a relative movement with regard to the testing tool along the longitudinal axis such that the testing tool 34 auto-aligns with the stud holder 14 with the floating arrangement 36. A hub or lift movement characterized for example by a backward motion of the stud holder 14 and linear drive 16 can occur (see arrow B). In the second step, the stud holder 14 and the linear motor 16 is driven in a base position, which is the position of reference for initiating the control of the stud holder 14. Alternatively, the stud holder and the linear drive may have reached the base position directly in the first step.

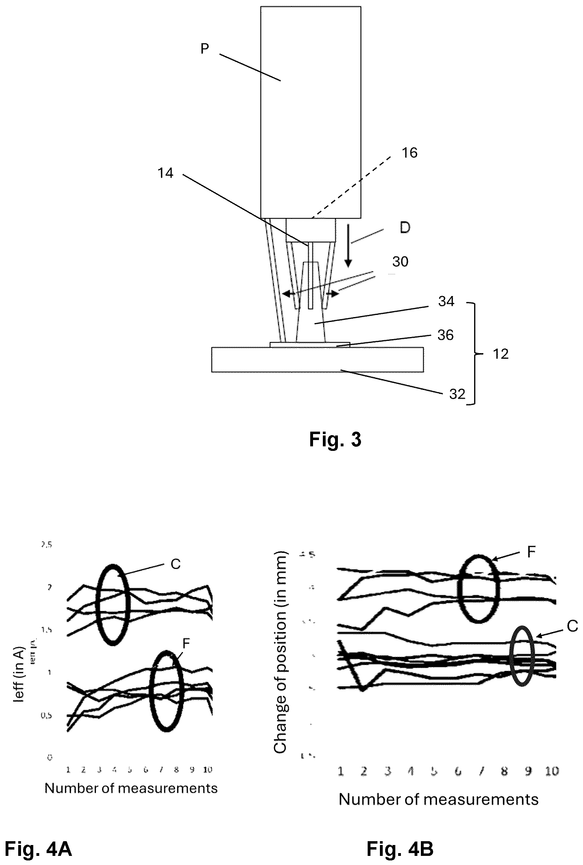

In a third step, depicted in Fig. 3, the stud holder 14 has a further relative movement with regard to the testing tool along the longitudinal axis X in the direction of arrow D such that the testing tool 34 may penetrate at least partially the recess of the stud holder. The linear drive 16 moves the stud holder 14 along the longitudinal axis X. The tongues of the stud holder 14 contacts the testing tool 34 and can be radially deviated.

The stud holder 14 may, in a first embodiment, be moved to a defined position by the linear drive 16. The force measurements from the sensors of the linear drive 16 are fed back to a control system 37. The control system 37 compares the measured forces with the desired forces or force thresholds for reaching the defined position.

In a second embodiment, the linear drive 16 may be moved with a defined force and the end position is compared with a pre-defined or desired position or position thresholds.

In a third embodiment, the stud holder 14 is moved from a reference position to a pre-given or pre-defined position by the linear drive 16 and the force-displacement curve of the linear drive is compared with a reference curve.

More generally, during the third step, a parameter of the linear drive 16 is recorded and for example compared for instance to a pre-defined value, a pre-defined value range or threshold or a previous value(s) for assessing the condition of the stud holder. The comparison algorithm may include a programmable tolerance for warning and faults. The first, second and third steps may be undertaken after every weld cycle or after several weld cycles. For instance, every ten or twenty studs welded, the condition of the stud holder may be tested according to the method disclosed.

A machine learning system 38 may be associated with the welding device 10 for analyzing the parameters of the linear drive and predicting the replacement of the stud holder based on the measured parameter of the linear drive. More precisely it is determined if the stud holder 14 may be further used or need to be cleaned or need to be changed. The machine learning system 38 may also collect data on various parameters related to the environment of the joining device, such as maintenance counters, welding parameters, and other relevant factors.

The operational status of the stud holder 14 may thus be determined. An alert can be sent to the welding device or any other controlling tool or control system 37 to order or program a change or the cleaning of the stud holder 14, if needed. Alternatively, the remaining life time of the stud holder 14 may be determined.

Fig. 4A and Fig. 4B show the results of two tests, each realized on ten stud holders (for Fig. 4A) five of them being in a normal state, adapted to perform a stud welding operation and the five other having issues; and 13 stud holders (for Fig. 4B), eight of them being in a normal state, adapted to perform a stud welding operation and the five other having issues. For each test, 10 measurements have been made.

Fig. 4A shows the amperage leff in Amper measured for each measurement on the Y-axis, when the stud holder is driven to a given position (for instance in the present case a 2 mm hub). As shown in Fig. 4A, the five stud holder having a correct condition (see C) have an leff which remain in the same range, wherein the five improper stud holders (see F) have a measured leff which is in another range.

Fig. 4B shows the position offset for each measurement on the Y-axis, when the linear drive applies a given force (Amperage with current pulse 2 Amperes and 500 milliseconds) to the stud holder 14. As shown on the figure, the five correct stud holders (C) behave differently from the improper stud holders (F).
stud welding device 10
arm 11
a testing unit 12
stud holder 14
a linear drive 16
supporting foot 22
longitudinal axis X
recess 28
tongues 30
base body 32
testing tool 34
floating arrangement 36
control system 37
machine learning system 38
correct stud holders C
improper stud holders F
pneumatic air mechanism P

## Claims

1. Method for controlling the condition of a stud holder (14) of a welding device (10) comprising the step of:
- Providing a welding device (10) comprising a stud holder extending along a longitudinal axis (X) and forming a recess adapted to receive a stud for its welding to a workpiece and a linear drive adapted to drive the stud holder for the welding of a stud to a workpiece;
- Providing a testing unit (12);
- Aligning the welding device (10) and the testing unit (12);
- Driving the stud holder (14) toward the testing unit (12);
- Measuring a parameter of the linear drive (16) for assessing the condition of the stud holder (14).

2. Method according to claim 1, wherein the testing unit (12) comprises a base body (32) and a testing tool (34) protruding from the base body, and wherein the testing tool has a conical shape configured to be partly inserted within the recess of the stud holder.

3. Method according to claim 2, wherein the testing tool (34) is floatingly mounted on the base body (32).

4. Method according to any of claims 2 or 3, wherein the stud holder (14) is first driven in a base position, in which the stud holder contacts the testing tool (34) and is then further driven toward the base body (32) to measure the parameter of the linear drive for assessing the condition of the stud holder.

5. Method according to any of claims 1 to 4, wherein the measurement is realized by controlling the movement of the linear drive (16) up to a defined position and comparing the measured force used by the linear drive to reach the defined position with a reference force.

6. Method according to any of claims 1 to 4, wherein the measurement is realized by moving the linear drive (16) until a pre-defined force is reached and comparing the position reached with a reference position.

7. Method according to any of claims 1 to 4, wherein the measurement is realized by moving the linear drive (16) up to a reference position, recording the force-displacement curve, and comparing the recorded force-displacement curve with a reference force-displacement curve.

8. Method according to any of claims 5 to 7, wherein an alert for programming the replacement of the stud holder (14) is sent to a control unit if:
- the measured counterforce is outside of the reference force range, or
- the reached position is outside of the reference position range, or
- the recorded force-displacement curve is outside of the reference force-displacement curve range.

9. Method according to any of claims 1 to 8, wherein the steps of:
- Aligning the welding device (10) and the testing unit (12);
- Driving the stud holder (14) toward the testing unit (12);
- Measuring a parameter of the linear drive for assessing the condition of the stud holder,
are undertaken at pre-programmed time or usage intervals.

10. Method according to any of claims 1 to 9, wherein a machine learning system (38) is associated with the welding device (10) for analyzing and predicting the replacement of the stud holder based on the measured parameter of the linear drive.

11. Method according to any of claims 1 to 10, wherein a robot arm moves the welding device (10) for its alignment with the testing unit.

12. Method according to any of claims 1 to 10, wherein the welding device (10) is manually aligned with the testing unit (12).

13. Arrangement for implementing the method according to any of claims 1 to 12, comprising a welding device (10) with a stud holder (14) and a linear drive (16) integrated to the welding device adapted to move the stud holder for the welding of a stud to a workpiece, and a testing unit (12) comprising a base body and a testing tool protruding from the base body, wherein the testing tool has a conical shape.

14. Arrangement according to claim 13, wherein the stud holder (14) comprises a plurality of tongues distributed around the longitudinal axis (X), wherein the plurality of tongues is adapted to be arranged at least partly around the testing tool and to contact said testing tool.
